# EUROPEAN PATENT APPLICATION

(11) **EP 4 316 264 A1**
(43) Date of publication of application: **07.02.2024**
(21) Application number: 22774332.5
(22) Date of filing: 25.03.2022
(51) Int. Cl.: A23K 20/105, A23K 40/10, A23K 40/30, A23K 20/158

(54) **NOVEL SODIUM BUTYRATE PARTICLE AND PREPARATION METHOD THEREFOR**

(30) Priority: 25.03.2021 CN 202110319851
(71) Applicant: Singao (Xiamen) Agribusiness Development Co., Ltd., Xiamen, Fujian 361006 (CN); Singao (Longyan) Biotech Co., Ltd., Longyan, Fujian 366215 (CN); Singao (Xuzhou) Biotech Co., Ltd., Xinyi, Jiangsu 221499 (CN)
(72) Inventor: ZHANG, Liang, Xiamen, Fujian 361026 (CN); YANG, Yugan, Xiamen, Fujian 361026 (CN); LAI, Zhouwen, Xiamen, Fujian 361026 (CN); HUANG, Yizhu, Xiamen, Fujian 361026 (CN)
(74) Representative: J A Kemp LLP
(86) International application number: PCT/CN2022/082916
(87) International publication number: WO 2022/199678

(57) **Abstract**

A novel sodium butyrate particle and a preparation method therefor. The sodium butyrate particle has an onion-like layered structure, the layered structure is compact and cannot be peeled off, and the sodium butyrate particle has a spheroid-like appearance. The sodium butyrate particle also has a grape-bunch-like structure integrally formed by agglomeration, aggregation and bonding of small and medium-sized particles. Sodium butyrate particles can be effectively and uniformly dispersed in feed, and are not easy to settle during storage and transportation, so that the service efficiency is effectively improved.

## Description

### FIELD

The present disclosure belongs to the field of additives, and in particular, to a novel sodium butyrate particle and a preparation method therefor.

### BACKGROUND

Sodium butyrate, as a non-antibiotic growth promoting feed additive, is mainly consists of butyrate ions, has multiple effects of a strong food attractant, a gastrointestinal physiological regulator, an acidifier, an electrolyte balance regulator, and the like, achieves effects in improving body immunity and production performance, and can replace part antibiotics. It has been listed as a novel feed additive in the "Catalog of Feed Additive Varieties" by the Ministry of Agriculture in 2006.

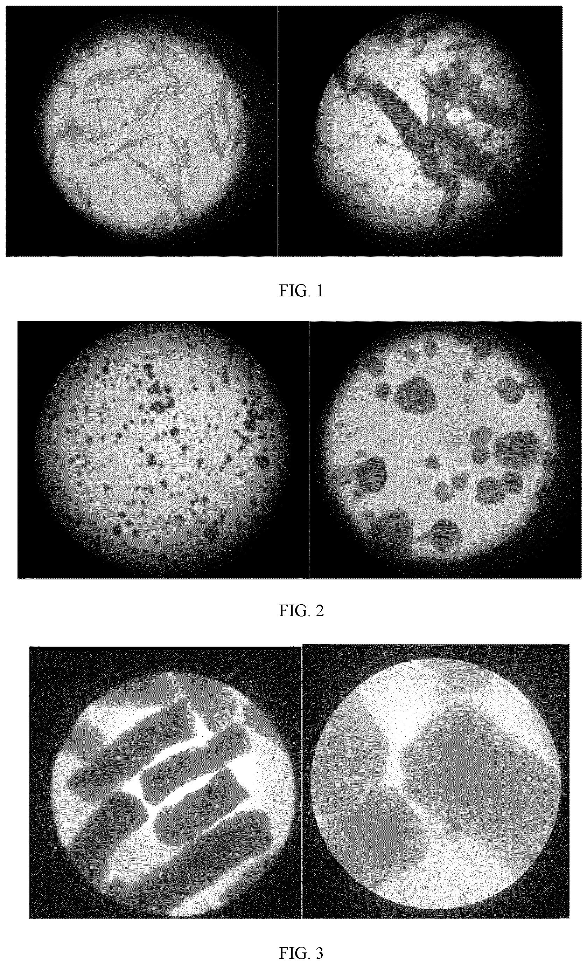

The production and preparation of sodium butyrate mainly involves the synthesis of n-butyric acid and sodium hydroxide. An early sodium butyrate chemical product before 2004: after an acid-base reaction, reaction feed liquid was directly dried or concentrated, crystallized, centrifuged, filtered, and dehydrated, a wet cake was broken and was subjected to various drying methods, and then a dry block or a filter cake was broken and crushed to obtain the product. Sodium butyrate powder particles maintain inherent needle-like crystalline form of varying sizes, which are easily interwoven and entangled, easily absorb moisture and agglomerate, and have poor fluidity. A product that has poor fluidity and is highly prone to clumping inevitably causes non-uniform mixing and slow dissolution during use. The product is needle like or cotton like (FIG. 1), and it is easy to recrystallize and crystals grow into fluffy agglomerates after long-term storage.

In May 2004, the sodium butyrate product (FIG. 2) spray dried powder was emerged: after an acid-base reaction, a reaction feed liquid was directly centrifuged, and sodium butyrate was spray-dried into powder by a pressure spray drying tower. The microstructure of sodium butyrate powder particles prepared by this preparation method is microsphere saccular shaped. Compared with early sodium butyrate, the spray-dried sodium butyrate has good fluidity. By proper sealing and storage, it does not absorb moisture and does not agglomerate easily. It is instantly dissolved in water, which is greatly easy to mix for use and dissolve for use. However, when it is mixed in feed, there are still problems that it is difficult to mix non-uniformly and tends to settle at the bottom.

Another type of preparation process for sodium butyrate is conventional granulation (FIG. 3). For example: 1, wet granulation: 98% sodium butyrate raw powder is added with water or an appropriate amount of adhesive, is granulated and pelleted by all of a stirring method, a particle swaying method, a rotating method, various forms of extrusion granulation method, a mixed granulation method, a granulating method, a shot blasting method, and the like, and then is formed by a plurality of drying methods. 2, dry granulation is not suitable because it is difficult to achieve practically applicable particle size and fluidity by tablet pressing and granulation forming, and it is easy to collapse and scatter under a force and a pressure. Conventional granular sodium butyrate appears in various forms of particles. Particle shapes include irregular particles, horizontally, laterally, and vertically extruded columnar particles, or particles that are subjected to granulating and shot blasting.

The existing sodium butyrate particles, due to their pure circular or columnar shapes, are prone to problems such as non-uniform dispersion and settling to the bottom of feed when mixed in the feed, which will lead to a series of problems such as low addition efficiency and waste of sodium butyrate.

### SUMMARY

In an aspect, the present disclosure provides a preparation method for a butyrate salt additive, which includes the following steps: providing a crystal nucleus and a butyrate feed liquid for a fluidized bed; and forming butyrate particles by a cyclic fluidization crystallization method.

The term "crystal nucleus" used in the present disclosure refers to an embryo of a new phase that is initially formed from a mother phase and can stably exist in a crystallization process. It is a nucleus for the growth of a new crystal. The crystal nucleus may be formed spontaneously or provided by the outside world.

In some implementation solutions, the crystal nucleus and the butyrate are the same or different substances. In some implementation solutions, the crystal nucleus may be a non-butyrate crystal nucleus. In some implementation solutions, the crystal nuclei may be a butyrate crystal nucleus. In some implementation solutions, the butyrate is selected from at least any one of sodium butyrate, potassium butyrate, calcium butyrate, or magnesium butyrate. In some implementation solutions, fluidization is performed in a continuous fluidized bed.

In some implementation solutions, the preparation method includes the following steps:
S1, blowing hot air into a fluidized bed after providing a crystal nucleus;
S2, spraying a butyrate feed liquid to make particles grow;
S3, continuously drying the particles prepared in S2; and
S4, drying the particles prepared in S3.

In some implementation solutions, in S1, the total inlet air pressure is 1000 to 2000 pa, and the total inlet air temperature is 100 to 200°C.

In some implementation solutions, the total inlet air pressure may be, for example, 1100 pa, 1200 pa, 1300 pa, 1400 pa, 1450 pa, 1460 pa, 1470 pa, 1480 pa, 1490 pa, 1491pa, 1492pa, 1493pa, 1494pa, 1495pa, 1496pa, 1497pa, 1498pa, 1499pa, 1500 pa, 1510 pa, 1520 pa, 1530 pa, 1531pa, 1532pa, 1533pa, 1534pa, 1535pa, 1536pa, 1537pa, 1538pa, 1539pa, 1540 pa, 1550 pa, 1560 pa, 1570 pa, 1580 pa, 1590 pa, 1600 pa, 1650 pa, 1651pa, 1652pa, 1653pa, 1654pa, 1655pa, 1656pa, 1657pa, 1658pa, 1659pa, 1660 pa, 1700 pa, 1800 pa or 1900 pa, or a range consists of any two numerical values above. In some implementation solutions, the total inlet air temperature may be, for example, 100°C, 110°C, 120°C, 130°C, 131°C, 132°C, 133°C, 134°C, 135°C, 136°C, 137°C, 138°C, 139°C, 140°C, 141°C, 142°C, 143°C, 144°C, 145°C, 146°C, 147°C, 148°C, 149°C, 150°C, 160°C, 161°C, 162°C, 163°C, 164°C, 165°C, 166°C, 167°C, 168°C, 169°C, 170°C, 180°C, 181°C, 182°C, 183°C, 184°C, 185°C, 186°C, 187°C, 188°C, 189°C, 190°C or 200°C, or a range consists of any two numerical values above.

In some implementation solutions, the hot air is graded hot air.

In some implementation solutions, the hot air is blown in longitudinally from a bottom, with an inlet air temperature of 100°C to 280°C, preferably 120°C to 230°C, and more preferably 140°C to 200°C. The inlet air temperature may be, for example, 110°C, 120°C, 130°C, 140°C, 150°C, 160°C, 170°C, 180°C, 190°C, 200°C, 210°C, 220°C, 230°C, 240°C, 250°C, 260°C or 270°C, or may be, for example, 185°C, 195°C, 205°C or 215°C, or a range consists of any two numerical values above.

In some implementation solutions, an air pressure difference of material layers is 1000 pa to 3000 pa, and the temperature of the material layers is 40°C to 180°C; and in some implementation solutions, the air pressure difference of material layers is 1500 pa to 2500 pa, and the temperature of the material layers is 40°C to 150°C. The air pressure difference of material layers may be, for example, 1600 pa, 1700 pa, 1800 pa, 1900 pa, 2100 pa, 2200 pa, 2300 pa or 2400 pa, or may be, for example, 2010 pa, 2020 pa, 2030 pa, 2040 pa, 2050 pa, 2060 pa, 2070 pa, 2080 pa or 2090 pa, or may be, for example, 2041 pa, 2042 pa, 2043 pa, 2044 pa, 2045 pa, 2046 pa, 2047 pa, 2048 pa or 2049 pa, or a range consists of any two numerical values above.

In some implementation solutions, the first grade of the graded hot air is 140°C to 180°C, the second grade of the graded hot air is 120°C to 160°C, and the third grade of the graded hot air is 100°C to 140°C. The first grade of the graded hot air may be, for example, 150°C, 160°C, 161°C, 162°C, 163°C, 164°C, 165°C, 166°C, 167°C, 168°C, 169°C or 170°C, or a range consists of any two numerical values above; the second grade of the graded hot air may be, for example, 130°C, 140°C, 141°C, 142°C, 143°C, 144°C, 145°C, 146°C, 147°C, 148°C, 149°C or 150°C, or a range consists of any two numerical values above; and the third grade of the graded hot air may be, for example, 110°C, 120°C, 121°C, 122°C, 123°C, 124°C, 125°C, 126°C, 127°C, 128°C, 129°C, 130°C or 135°C, or a range consists of any two numerical values above.

In some implementation solutions, in S2, a butyrate feed liquid is sprayed in grades.

In some implementation solutions, the concentration of the butyrate feed liquid is 5% to 80%. The concentration of butyrate of the butyrate feed liquid may be, for example, 10%, 15%, 20%, 25%, 30%, 35%, 40%, 45%, 50%, 55%, 60%, 65%, 70% or 75%, or 46%, 47%, 48%, 49%, 50%, 51%, 52%, 53%, 54%, 55%, 56%, 57%, 58% or 59%, or49.1%, 49.2%, 49.3%, 49.4%, 49.5%, 49.6%, 49.7%, 49.8%, 49.9%, 50%, 50.1%, 50.2%, 50.3%, 50.4%, 50.5%, 50.6%, 50.7%, 50.8% or 50.9%, or a range consists of any two numerical values above.

In some implementation solutions, the solvent of the butyrate feed liquid is a soluble solvent.

In some implementation solutions, the solvent of the butyrate feed liquid is selected from at least one of water, ethanol, and isopropyl alcohol.

In some implementation solutions, the total spraying volume of the butyrate feed liquid is 100 kg to 10 T per hour. The spraying volume may be, for example, 200 kg, 300 kg, 400 kg, 500 kg, 600 kg, 700 kg, 800 kg, 900 kg, 1000 kg, 2000 kg, 3000 kg, 4000 kg, 5000 kg, 6000 kg, 7000 kg, 8000 kg or 9000 kg, or a range consists of any two numerical values above.

In some implementation solutions, the first-grade spraying volume of the butyrate feed liquid sprayed in grades is 280 to 400 kg/hour, the second-grade spraying volume is 280 to 380 kg/hour, and the third-grade spraying volume is 250 to 370 kg/hour.

In some implementation solutions, in S3, a dehydration method is hot air drying; in some implementation solutions, the hot air drying is graded hot air drying; in some implementation solutions, the first grade of the graded hot air drying is 140°C to 180°C, the second grade is 120°C to 160°C, and the third grade is 100°C to 140°C. The first grade of the graded hot air may be, for example, 150°C, 160°C, 161°C, 162°C, 163°C, 164°C, 165°C, 166°C, 167°C, 168°C, 169°C or 170°C, or a range consists of any two numerical values above; the second grade of the graded hot air may be, for example, 130°C, 140°C, 141°C, 142°C, 143°C, 144°C, 145°C, 146°C, 147°C, 148°C, 149°C or 150°C, or a range consists of any two numerical values above; and the third grade of the graded hot air may be, for example, 110°C, 120°C, 121°C, 122°C, 123°C, 124°C, 125°C, 126°C, 127°C, 128°C, 129°C, 130°C or 135°C, or a range consists of any two numerical values above.

In some implementation solutions, in S4, the particles flow out to a fluidized bed when dried to the liquid content of 0.1% to 6%, for example, the particles may flow out to the fluidized bed when dried to the liquid content of 0.5%, 1%, 1.5%, 1.6%, 1.7%, 1.8%, 1.9%, 2%, 2.1%, 2.2%, 2.3%, 2.4%, 2.5%, 3%, 3.5%, 4%, 4.5%, 5% or 5.5 %, or a range consists of any two numerical values. In some implementation solutions, the particles flow out to a fluidized bed when dried to the liquid content of 0.5% to 3%; in some implementation solutions, the particles flow out to a fluidized bed when dried to the liquid content of 1% to 2.5%; and in some implementation solutions, the particles flow out to a fluidized bed when dried to the liquid content of 2%.

In some implementation solutions, the preparation method further includes S5 of screening the particles prepared in S4 according to particle sizes.

In some implementation solutions, the particle size in S5 is infinitely adjustable. In some implementation solutions, the particle size in S5 may be randomly set according to manufacturing needs. In some implementation solutions, the infinitely adjustable particle size may be adjusted continuously and/or at intervals with any accuracy.

In some implementation solutions, the particle size in S5 is 10 to 120 meshes.

In some implementation solutions, the particle size in S5 is 10 to 80 meshes. The particle size in S5 may be, for example, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 45, 50, 55, 60, 65, 70, 75, 80, 85, 90, 95, 100, 105, 110, 115 or 120 meshes, or a range consists of any two numerical values.

In some implementation solutions, S1 to S5 are cycled.

In an aspect, the present disclosure provides a butyrate salt additive, and is prepared by the preparation method.

In an aspect, the present disclosure provides a butyrate salt additive. The butyrate salt additive is granular, and has a structure formed by agglomeration of more than one spheroids. The more than one spheroids have needle-like crystal interweaving structures.

In some implementation solutions, the particle size of the butyrate salt additive is 10 to 120 meshes. In some implementation solutions, the particle size of the butyrate salt additive is 10 to 80 meshes. In some implementation solutions, the particle size of the butyrate salt additive may be, for example, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 45, 50, 55, 60, 65, 70, 75, 80, 85, 90, 95, 100, 105, 110, 115 or 120 meshes, or a range consists of any two numerical values.

In some implementation solutions, the particle size of the spheroids is 0.05 to 1.0 mm. For example, the particle size of the spheroids may be 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, 0.7 mm, 0.75 mm, 0.8 mm, 0.85 mm, 0.9 mm or 0.95 mm, or a range consists of any two numerical values.

As used in the present disclosure, including as used in the embodiments, and unless otherwise explicitly stated, all numbers can be considered as if they start with the words "substantially", "approximately", or "about", even if the term is not explicitly present. When describing amplitude and/or position to indicate that the described numerical value and/or position is within a reasonable expected range of values and/or positions, phrases "approximately" or "about" can be used. For example, a numerical value can be ±0.1% of the numerical value (or a numerical value range), ±1% of the numerical value (or a numerical value range), ±2% of the numerical value (or a numerical value range), ±5% of the numerical value (or a numerical value range), ±10% of the numerical value (or a numerical value range), ±15% of the numerical value (or a numerical value range), ±20% of the numerical value (or a numerical value range), and the like. Any numerical value range described in the present disclosure is intended to include all sub-value ranges or intermediate values contained within it.

The disclosure of the numerical values and numerical value ranges of specific parameters (such as temperature, molecular weight, and weight percentage) does not exclude other numerical values and numerical value ranges that are useful for the present disclosure. It can be expected that two or more specific example numerical values of a given parameter can determine endpoints of a numerical value range that the parameter can require. For example, if a parameter X is exemplified as having a numerical value A and is also exemplified as having a numerical value Z in the present disclosure, it can be expected that the parameter X can have a numerical value range from approximately A to approximately Z. Similarly, it can be expected that two or more numerical value ranges of disclosed parameters (whether these ranges are nested, overlapped, or distinct) include all possible combinations of numerical value ranges that the endpoints using the disclosed ranges can require. For example, if the parameter X is exemplified as a value within a range of 1 to 10 in the present disclosure, then it also describes a subrange of the parameter X, including, as examples only, such as 1 to 9, 1 to 8, 1 to 7, 2 to 9, 2 to 8, 2 to 7, 3 to 9, 3 to 8, 3 to 7, 2 to 8, 3 to 7, 4 to 6 or 7 to 10, 8 to 10 or 9 to10. The range includes its endpoints and the values within them, for example, the range 0 to 5 includes 0, >0, 1, 2, 3, 4, <5, and 5.

In some implementation solutions, the additive is added to a mixture (for example, feed) to become a part of the feed. In some implementation solutions, the additive is a feed additive.

In an aspect, the present disclosure provides feed, including the butyrate salt additive. In some implementation solutions, the feed further includes basal diet. In some implementation solutions, the basal diet includes at least one of rice bran, corn, soybean meal, and wheat bran.

In some implementation solutions, it is unexpectedly discovered that the sodium butyrate particles prepared by a specific preparation method of the present disclosure solve the problem of non-uniform mixing of the existing sodium butyrate in solid feed, and meanwhile, the sodium butyrate particles of the present disclosure are not easy to settle in the feed even after transportation. It is speculated that this is related to the special structure and surface morphology of the sodium butyrate particles prepared by the present disclosure. The surface structures of the particles have a "hook bite" effect with other raw materials in the feed, so they are difficult to settle even after transportation bumps. The utilization rate of a feed additive is effectively improved.

The sodium butyrate particles prepared by the present disclosure have a self-contained structure that is similar to onion skin and extremely dense compared to the onion skin without peeled layers in a particle growing process, and have an integrally formed grape-bunch-like structure that combines the agglomeration, aggregation, and bonding of small and medium-sized particles. The particle sizes of the small and medium-sized particles (spheroids) agglomerated and aggregated to the grape-bunch-like structure are 0.05 to 1.0 mm. It is different from conventional granulation that 98% sodium butyrate raw powder particles are bonded to each other or extruded into clumps and are granulated, formed, and dried by a plurality of simple processes.

The novel particles of the present disclosure are spheroid-like particles, good in fluidity, easy to mix and dissolve, and light in odor. The particle size range can be infinitely adjusted, granulation, forming, and continuous production can be performed at once, and the quantity is large and controllable.

### BRIEF DESCRIPTION OF THE DRAWINGS

FIG. 1 is a micrograph of an early sodium butyrate chemical product;
FIG. 2 is a micrograph of sodium butyrate spray-dried into powder;
FIG. 3 is a micrograph of sodium butyrate prepared by conventional granulation;
FIG. 4 is a photo of sodium butyrate particles prepared by Embodiment 1 under a 4x microscope;
FIG. 5 is a photo of sodium butyrate particles prepared by Embodiment 1 under a 10x microscope;
FIG. 6 is a photo of sodium butyrate particles prepared by Embodiment 1;
FIG. 7 is a photo of commercially available strip-shaped sodium butyrate particles;
FIG. 8 is a photo of commercially available smooth spherical sodium butyrate particles;
FIG. 9 shows photos of three different types of particles in Embodiment 2 under a 30x microscope and a 50x microscope; a lower row is an electron microscope photo of a particle photographed after being manually cut by using a stainless steel blade;
FIG. 10 shows profile photos of three different types of particles in Embodiment 2 under a 50x microscope, a 100x microscope, and a 200x microscope;
FIG. 11 shows photos of three different types of particles in Embodiment 2 under a 400x microscope and a 500x microscope;
FIG. 12 shows photos of three different types of particles in Embodiment 2 under a 1000x microscope;
FIG. 13 shows photos of three different types of particles in Embodiment 2 under a 2000x microscope;
FIG. 14 is a photo of three different types of particles in Embodiment 2 under a 3000x microscope; and

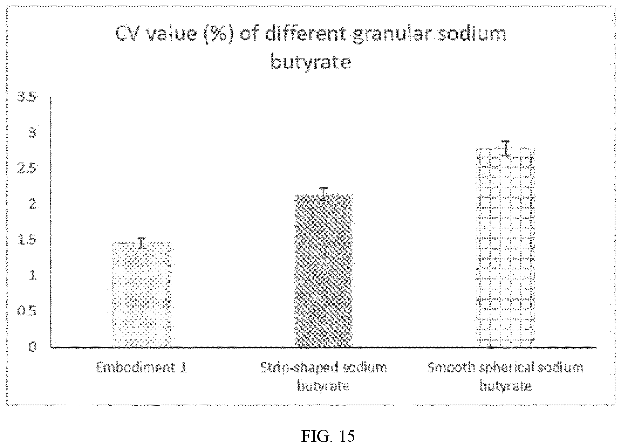

FIG. 15 shows comparison of mixing uniformity test results for different particles of sodium butyrate.

### DETAILED DESCRIPTION

The following further describes technical solutions of the present disclosure through specific embodiments. The specific embodiments do not represent limitations on the scope of protection of the present disclosure. Some non-essential modifications and adjustments made by other persons based on the concept of the present disclosure still fall within the scope of protection of the present disclosure.

"Containing" or "including" is intended to indicate that a composition (such as a medium) and method include the listed elements, but do not exclude other elements. When used for defining compositions and methods, "essentially consisting of" means excluding other elements of any significant importance to the combination for the stated purpose. Therefore, a composition essentially consisting of the elements defined in the present disclosure does not exclude other materials or steps that do not substantially affect basic and novel features of the present disclosure that are claimed to be protected. "Consisting of" means excluding trace elements and substantive method steps of other components. The implementation solution defined by each of these transitional terms is within the scope of the present disclosure.

The term "and/or" used in the present disclosure refers to any or all possible combinations containing one or more associated listed items. When used in lists of two or more items, the term "and/or" indicates that any one of the listed items can be used alone, or any combination of two or more listed items can be used. For example, if a composition, a combination, a structure, and the like is described as including (or containing) components A, B, C, and/or D, the composition may include A separately, include B separately, include C separately, include D separately, include a combination of A and B, include a combination of A and C, include a combination of A and D, include a combination of B and C, include a combination of B and D, include a combination of C and D, include a combination of A, B and C, include a combination of A, B and D, include a combination of A, C and D, include a combination of B, C and D, or include a combination of A, B, C and D.

### Embodiment 1 Preparation method for novel sodium butyrate particles

### 1. Particles 1

A preparation method for novel sodium butyrate particles included the following steps:
S1. In a fluidized bed, 550 kilograms of sodium butyrate masterbatch were added at once, and a plurality of channels of graded hot air were longitudinally and sequentially blown in from the bottom of the fluidized bed. The hot air parameters were as follows: the total inlet air pressure was 1532 pa, and the temperature was 164°C. The parameters of the plurality of channels of graded hot air were as follows: the first grade was 162°C, the second grade was 143°C, and the third grade was 126°C; an air pressure difference of a material layer was 2041 pa, and the temperature of the material layer was 61°C; and the masterbatch was in a fluidized boiling or fluidized tumbling state in the bed.

In S1, coarse particles fluidized and moved to a discharge end of the fluidized bed selectively, fine particles, powder particles, and fine powder moved towards a front end of the fluidized bed, and especially, the fine powder was selectively located at a top end of the fluidized bed.

S2. A sodium butyrate feed liquid was sprayed in grades in the front end of the fluidized bed. The concentration of a sodium butyrate aqueous solution was 50.2%. The graded spraying parameters were as follows: the first grade was 352 kg/hour, the second grade was 335 kg/hour, and the third grade was 319 kg/hour.

In S2, the fine powder and the small particles at the front end received the feed liquid, the fine powder and the small particles were bonded to each other and received the feed liquid separately, and the particles growing gradually fluidized from the front end and settled and moved to a rear end gradually.

S3. Hot air drying and dehydration were performed. The parameters of the hot air drying and dehydration were (the same as those in S1) as follows: the total inlet air pressure was 1532 pa, the temperature was 164°C, and the time was 1.2 hours.

S4. After the hot air drying and dehydration, the particles have been dehydrated to within 2% when reaching an end, and flowed out and were discharged from the fluidized bed.

S5. The particles prepared in S4 were screened. The particles were infinitely adjusted, the particles of 18 to 40 meshes (that is, the particle size of 0.425 to 1.0 mm) were selected for package in the present embodiment. Oversized coarse particles were returned into the fluidized bed with undersized small powder after being crushed. A granulating process from S1 to S4 was cycled.

In this experiment, 651 kg of sodium butyrate particles were prepared. Tests show that the water content is 1.6%, and the content of sodium butyrate is 99.58%.

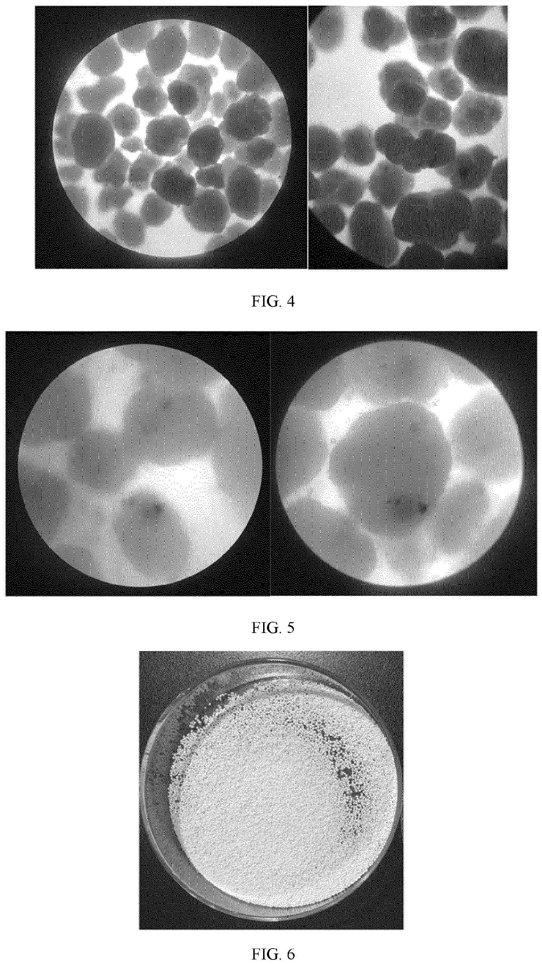

The photo of the prepared sodium butyrate particles under a 4x microscope is as shown in FIG. 4, and the photo under a 10x microscope is as shown in FIG. 5. It can be seen that the sodium butyrate particles are spheroid-like in appearance, and the particles are dense and not hollow.

In the present embodiment, the particle forming is a process of continuously spraying and smearing the sodium butyrate feed liquid in S2 and continuously drying and gradually growing in S4 on the basis of sodium butyrate powder on the existing sodium butyrate particles. Screening equipment with different particle sizes may be set in S5 as required, so that a final product may be infinitely controlled in a particle size range from 10 to 80 meshes (0.180 to 2.00 mm). During coating, there is a self-contained structure that is similar to onion skin and extremely dense compared to the onion skin without peeled layers, and an integrally formed grape-bunch-like structure that combines the agglomeration, aggregation, and bonding of small and medium-sized particles.

### 2. Particles 2 to 3

Particles 2 and particles 3 were prepared into sodium butyrate particles by changing parameters such as hot air temperature, corresponding air pressure, and feed liquid solubility of particles 1. As shown in Table 1 below.

**Table 1**

| Item | | Particles 1 | Particles 2 | Particles 3 |
|---|---|---|---|---|
| Adding sodium butyrate masterbatch (kg) | | 550 | 612 | 505 |
| Total inlet air pressure (pa) | | 1532 | 1652 | 1496 |
| Total inlet air temperature (°C) | | 164 | 182 | 145 |
| First grade | Temperature (°C) | 162 | 181 | 145 |
| | Flow rate (kg/h) | 352 | 392 | 306 |
| Second grade | Temperature (°C) | 143 | 160 | 129 |
| | Flow rate (kg/h) | 335 | 366 | 293 |
| Third grade | Temperature (°C) | 126 | 139 | 122 |
| | Flow rate (kg/h) | 319 | 355 | 274 |
| Air pressure difference of material layers (pa) | | 2041 | 2165 | 1905 |
| Material layer temperature (°C) | | 61 | 72 | 52 |
| Concentration of sodium butyrate aqueous solution (%) | | 50.2 | 46.4 | 51.3 |
| Liquid spraying time (h) | | 1.2 | 1.6 | 2.1 |
| Weight of collected particles (kg) | | 651 | 816 | 924 |
| Particle size of screened particles (mm) | | 0.425-1.0 (18-40 meshes) | 0.25-0.85 (20-60 meshes) | 0.60-1.4 (14-30 meshes) |
| Water content (%) | | 1.6 | 1.0 | 1.9 |
| Sodium butyrate content (%) | | 99.58 | 99.23 | 99.35 |

### Embodiment 2 Performance test for granular sodium butyrate

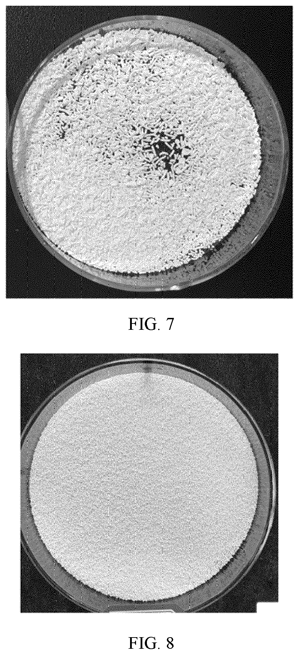

Samples to be tested include: sodium butyrate particles (FIG. 6) prepared in Embodiment 1, commercially available strip-shaped sodium butyrate particles (FIG. 7), and commercially available smooth spherical sodium butyrate particles (FIG. 8).

### Particle appearance, particle size, and odor

Basic properties of three different types of particles are as shown in Table 2.

**Table 2 Various properties of different sodium butyrate particles**

| | Embodiment 1 | Strip-shaped sodium butyrate | Smooth spherical sodium butyrate |
|---|---|---|---|
| Properties | Spheroid-like, stable, unbreakable | Strip-shaped, with many edges and corners, breakable | Spherical, smooth surface |
| Particle size | 97.93% passing through 20 meshes | 96.28% passing through 14 meshes | 100% passing through 20 meshes |
| Odor | Mild greasy odor | Mild greasy odor | Resin aroma |

### Comparison of electron microscope images of particles

Before scanning under an electron microscope, various samples were freeze-dried at -50°C first to meet operating condition requirements of a scanning electron microscope.

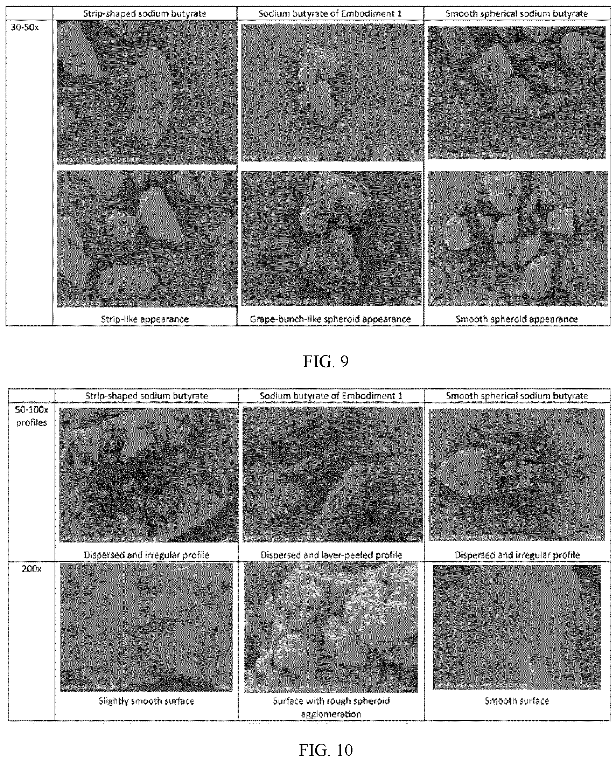

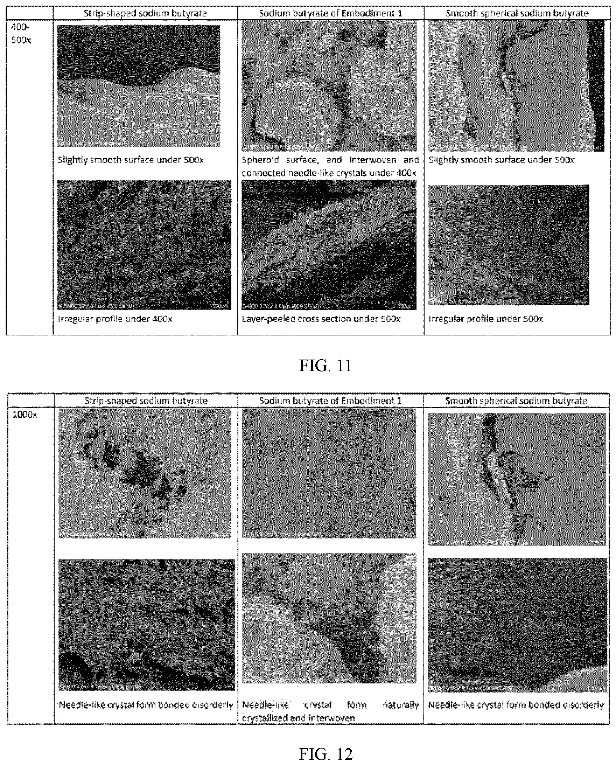

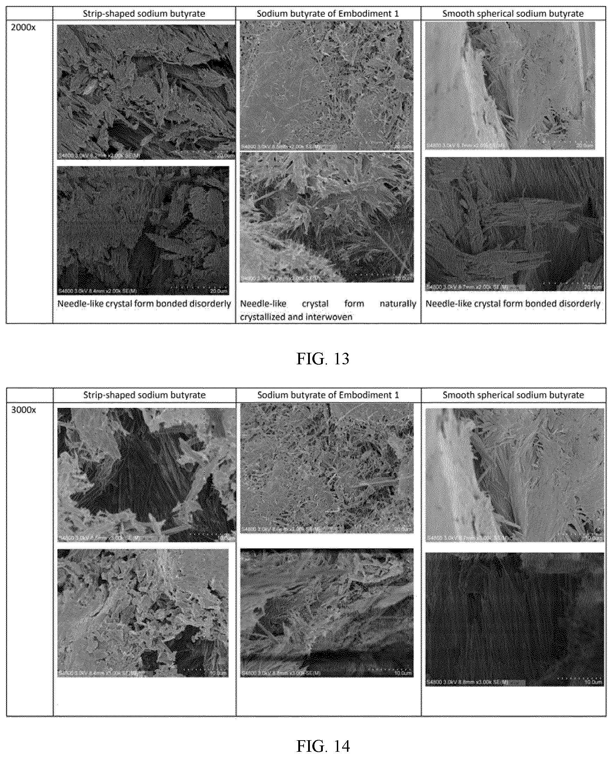

FIG. 9 to FIG. 14 show the comparative images of three different particles of the samples to be tested under different electron microscope magnifications. As shown in FIG. 9, the sodium butyrate particles of Embodiment 1 appear as grape-bunch-like spheroids. As shown in FIG. 10, the profile of the sodium butyrate of Embodiment 1 has peeled layers, and the surface appears rough spheroid agglomeration. Further magnified, as shown in FIG. 11 to FIG. 14, needle-like crystals appear and are interwoven between spheroids of the sodium butyrate of Embodiment 1. The commercially available strip-shaped sodium butyrate and the commercially available smooth spherical sodium butyrate are greatly different in terms of surface morphology, profile, and crystal form interweaving state.

### Mixing uniformity and settlement test

A test method includes: three types of granular sodium butyrate 40g each were mixed with 20 kilograms of rice bran in a mixer for 20 minutes, and three replicates were made for each sample.

### Mixing uniformity

In each replicate, samples were taken from 10 random sites of the rice bran mixed with the granular sodium butyrate; 20 g of samples were sampled each time; a mixture of the samples taken from the 10 random sites was used as a duplicate sample; and the mixing uniformity (a Coefficient of Variation (CV)) was tested on the basis of GB/T 5918-2008.

CV results of three types of granular sodium butyrate are as shown in Table 3:

**Table 3 Mixing uniformity test (%) of different granular sodium butyrate**

| | Embodiment 1 | Strip-shaped sodium butyrate | Smooth spherical sodium butyrate |
|---|---|---|---|
| Replica 1 | 1.35 | 2.02 | 2.67 |
| Replica 2 | 1.48 | 2.16 | 2.75 |
| Replica 3 | 1.52 | 2.22 | 2.91 |
| Average value | 1.45 | 2.13 | 2.76 |

In combination with FIG. 9, it can be seen that the granular sodium butyrate prepared in Embodiment 1 has the lowest CV value, only 1.45%, and has significant differences (p<0.01) compared to other two types of granular sodium butyrate, which indicates that the granular sodium butyrate prepared by the present disclosure has better mixing uniformity.

### Settlement test

The settlement conditions of the granular sodium butyrate before and after transportation were tested. The testes for same batch were performed simultaneously.

After three types of granular sodium butyrate were mixed with the rice bran, samples were taken from an upper site, a middle site, and a lower site of each sample for test the content of sodium butyrate. After that, the samples were placed upright and transported for a long distance (transported for about 200 kilometers back and forth from Liancheng to Longyan through the Mountain National Highway, and the transportation was completed in the same batch in one test), and the samples were respectively taken from the upper site, the middle site, and the lower site to test the content of sodium butyrate. Test results are shown in Table 2:

**Table 2 Settlement test results**

| | **Before settlement** | | | **After settlement** | **Range/before /after** | **Upper difference** | **Middle difference** | **Bottom difference** | **Settlement** |
|---|---|---|---|---|---|---|---|---|---|
| **Product name** | | **Position** | **Content (%)** | **Content (%)** | | | | | |
| Strip-shaped sodium butyrate | Replica 1 | Upper | 0.7 | 0.3 | 0.5/0.3 | -0.4 | | | Obvious settlement |
| | | Middle | 0.2 | 0.6 | | | 0.4 | | |
| | | Lower | 0.2 | 0.6 | | | | 0.4 | |
| | Replica 2 | Upper | 0.8 | 0.5 | 0.5/0.4 | -0.3 | | | Obvious settlement |
| | | Middle | 0.3 | 0.7 | | | 0.4 | | |
| | | Lower | 0.4 | 0.9 | | | | 0.5 | |
| | Replica 3 | Upper | 0.9 | 0.5 | 0.7/0.5 | -0.4 | | | Obvious settlement |
| | | Middle | 0.9 | 1.0 | | | 0.1 | | |
| | | Lower | 0.2 | 0.6 | | | | 0.4 | |
| Embodiment 1 | Replica 1 | Upper | 0.2 | 0.1 | 0.2/0.4 | -0.1 | | | Slight settlement |
| | | Middle | 0.4 | 0.5 | | | 0.1 | | |
| | | Lower | 0.2 | 0.3 | | | | 0.1 | |
| | Replica 2 | Upper | 0.5 | 0.4 | 0.3/0.2 | -0.1 | | | Unobvious |
| | | Middle | 0.4 | 0.4 | | | 0.0 | | settlement |
| | | Lower | 0.6 | 0.5 | | | | -0.1 | |
| | Replica 3 | Upper | 0.2 | 0.3 | 0.2/0.3 | 0.1 | | | Slight settlement |
| | | Middle | 0.2 | 0.4 | | | 0.2 | | |
| | | Lower | 0.3 | 0.5 | | | | 0.2 | |
| Smooth spherical sodium butyrate | Replica 1 | Upper | 0.3 | 0.2 | 0.3/0.6 | -0.1 | | | Slight settlement |
| | | Middle | 0.4 | 0.5 | | | 0.1 | | |
| | | Lower | 0.6 | 0.8 | | | | 0.2 | |
| | Replica 2 | Upper | 0.7 | 0.5 | 0.3/0.5 | -0.2 | | | Slight settlement |
| | | Middle | 0.6 | 1.0 | | | 0.4 | | |
| | | Lower | 0.4 | 0.6 | | | | 0.2 | |
| | Replica 3 | Upper | 0.7 | 0.4 | 0.4/0.3 | -0.3 | | | Obvious settlement |
| | | Middle | 0.3 | 0.7 | | | 0.4 | | |
| | | Lower | 0.4 | 0.7 | | | | 0.3 | |

As shown by the results in Table 2, according to the sodium butyrate particles prepared in Embodiment 1, after transportation, the sodium butyrate particles in each of an upper layer, a middle layer, and a lower layer settled hardly; and the strip-shaped sodium butyrate in each of the upper layer, the middle layer, and the lower layer settled obviously, and the smooth spherical sodium butyrate also settled obviously, and more obviously in the middle layer and the lower layer.

In view of many possible embodiments that can apply the disclosed inventive principle, it is to be recognized that the illustrated embodiments are only preferred examples of the present disclosure and are not to be considered as limiting the scope of the present disclosure. On the contrary, the scope of the present disclosure is limited by the accompanying claims. Therefore, we claim to protect all inventions that fall within the scope and spirit of these claims.

## Claims

1. A preparation method for a butyrate salt additive, comprising the following steps:
providing a crystal nucleus and a butyrate feed liquid for a fluidized bed; and forming butyrate particles by a cyclic fluidization crystallization method.

2. The preparation method according to claim 1, wherein the crystal nucleus and the butyrate are the same or different substances;
preferably, the crystal nucleus is a butyrate crystal nucleus;
preferably, the butyrate is selected from at least any one of sodium butyrate, potassium butyrate, calcium butyrate, or magnesium butyrate; and
preferably, fluidization is performed in a continuous fluidized bed.

3. The preparation method according to claim 1 or 2, comprising the following steps:
S1, blowing hot air into a fluidized bed after providing a crystal nucleus;
S2, spraying a butyrate feed liquid to make particles grow;
S3, continuously drying the particles prepared in S2; and
S4, drying the particles prepared in S3.

4. The preparation method according to claim 3, wherein in S1, the total inlet air pressure is 1000 pa to 2000 pa, and the total inlet air temperature is 100°C to 200°C;
preferably, the hot air is graded hot air;
preferably, the hot air is blown in longitudinally from a bottom, with an inlet air temperature of 100°C to 280°C, preferably 120°C to 230°C, and more preferably 140°C to 200°C;
preferably, an air pressure difference of material layers is 1000 pa to 3000 pa, and the temperature of the material layers is 40°C to 180°C; preferably, the air pressure difference of material layers is 1500 pa to 2500 pa, and the temperature of the material layers is 40°C to 150°C; and
preferably, the first grade of the graded hot air is 140°C to 180°C, the second grade is 120°C to 160°C, and the third grade is 100°C to 140°C.

5. The preparation method according to claim 3 or 4, wherein in S2, the butyrate feed liquid is sprayed in grades;
preferably, the butyrate concentration of the butyrate feed liquid is 5% to 80%;
preferably, the solvent of the butyrate feed liquid is a soluble solvent;
preferably, the solvent of the butyrate feed liquid is selected from at least one of water, ethanol, and isopropyl alcohol;
preferably, the total spraying volume of the butyrate feed liquid is 100 kg to 10 T per hour; and
preferably, the first-grade spraying volume of the butyrate feed liquid sprayed in grades is 280 to 400 kg/hour, the second-grade spraying volume is 280 to 380 kg/hour, and the third-grade spraying volume is 250 to 370 kg/hour.

6. The preparation method according to any one of claims 3 to 5, wherein in S3, a dehydration method is hot air drying;
preferably, the hot air drying is graded hot air drying; and
preferably, the first grade of the graded hot air is 140°C to 180°C, the second grade is 120°C to 160°C, and the third grade is 100°C to 140°C.

7. The preparation method according to any one of claims 3 to 6, wherein in S4, the particles flow out of the fluidized bed when dried to liquid content of 0.1 to 6%;
preferably, the particles flow out of the fluidized bed when dried to the liquid content of 0.5% to 3%;
preferably, the particles flow out of the fluidized bed when dried to the liquid content of 1% to 2.5%; and
preferably, the particles flow out of the fluidized bed when dried to the liquid content of 2%.

8. The preparation method according to any one of claims 3 to 7, further comprising S5 of screening the particles prepared in S4 according to particle sizes;
preferably, the particle size in S5 is infinitely adjusted;
preferably, the particle size in S5 is 10 to 120 meshes;
preferably, the particle size in S5 is 10 to 80 meshes; and
preferably, S1 to S5 are cycled.

9. A butyrate salt additive, being prepared by the preparation method according to any one of claims 1 to 8.

10. A butyrate salt additive, wherein the butyrate salt additive is granular, and has a structure formed by agglomeration of more than one spheroids; and the more than one spheroids have needle-like crystal interweaving structures.

11. The butyrate salt additive according to claim 10, wherein the particle size of the butyrate salt additive is 10 to 120 meshes;
preferably, the particle size of the butyrate salt additive is 10 to 80 meshes; and preferably, the particle size of the spheroids is 0.05 to 1.0 mm.

12. The preparation method according to any one of claims 1 to 8, or the butyrate salt additive according to any one of claims 9 to 10, wherein the additive is a feed additive.

13. Feed, comprising the butyrate salt additive according to any one of claims 10 to 11;
preferably, the feed further comprising basal diet; and
preferably, the basal diet comprising at least one of rice bran, corn, soybean meal, and wheat bran.

14. The butyrate salt additive according to any one of claims 10 to 11, or the feed according to claim 13, wherein the butyrate is selected from at least any one of sodium butyrate, potassium butyrate, calcium butyrate, or magnesium butyrate.
